(19) Europäisches Patentamt
European Patent Office
Office européen des brevets

(11) **EP 3 829 048 A1**

(12) **EUROPEAN PATENT APPLICATION**

(43) Date of publication:
**02.06.2021   Bulletin 2021/22**

(51) Int Cl.:
**H02P 6/32** (2016.01)      **H02P 9/30** (2006.01)

(21) Application number: **19212152.3**

(22) Date of filing: **28.11.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **ABB Schweiz AG
5400 Baden (CH)**

(72) Inventors:
• **BERTOLDI, Frederico
723 45 Västerås (SE)**

• **RODRIGUEZ, Pedro
722 25 Västerås (SE)**
• **LIN, Chenjie
Guquay Varina, NC 27526 (US)**
• **BOSGA, Sjoerd
723 53 Västerås (SE)**
• **MOHANAVEERAMANI, Aravind
722 19 Västerås (SE)**
• **OKAZAKI, Yuhei
722 19 Västerås (SE)**

(74) Representative: **Kransell & Wennborg KB
P.O. Box 27834
115 93 Stockholm (SE)**

(54) **CURRENT SOURCE CONVERTER AND METHOD FOR CONTROL THEREOF**

(57)      A current source converter, CSC, for a multiphase brushless excitation system is presented. The CSC comprises a thyristor block and a commutation block. The thyristor block comprises a pair of thyristors (T1-T6) per phase of the multiphase brushless excitation system configured in a full-wave bridge. The commutation block comprises a half-bridge current source converter with two commutation switches (Si, S2) configured for two quadrant operation of the multiphase brushless excitation system. Each midpoint of the pair of thyristors is configured to be connected to an excitation phase of the multiphase brushless excitation system and DC terminals of each pair of thyristors are connected to DC terminals of the commutation block.

Fig. 5

EP 3 829 048 A1

## Description

## TECHNICAL FIELD

The present disclosure relates to a current source converter for a multiphase brushless excitation system, and a method for controlling the current source converter.

## BACKGROUND

Conventional excitation systems for synchronous machines can be either static or brushless. The first ones benefit from fast transient response, but need more maintenance because of the presence of carbon brushes. Brushless excitation systems are more robust as an exciter machine is used to feed an AC/DC diode rectifier that, in turn, powers the field winding. Field wound synchronous machines typically use brushless excitation systems. Both synchronous and asynchronous machine types can be used for the excitation system. Regulation of the field winding is then achieved by controlling the stator voltage of the exciter machine.

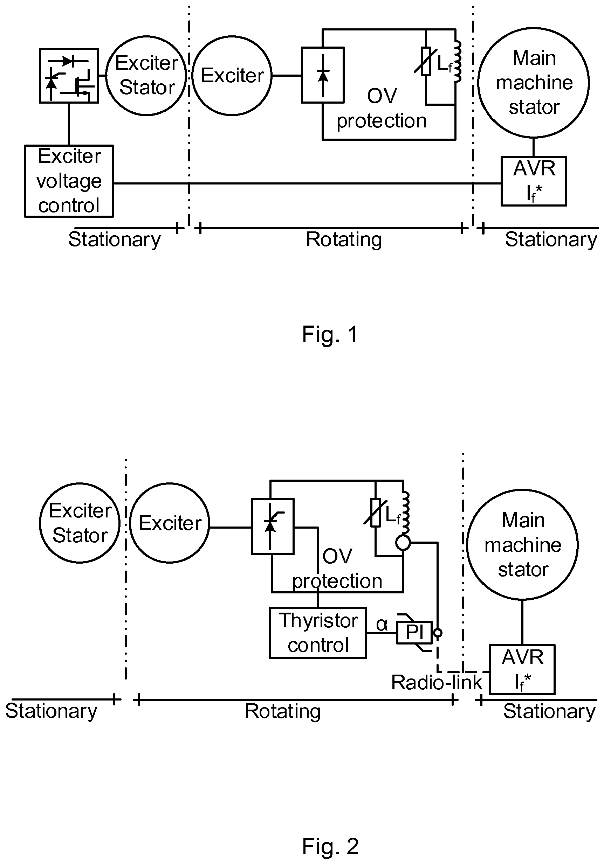

An example of a conventional brushless excitation system and its control is illustrated in Fig. 1. The system comprises a first stationary part including an exciter stator driven by an AC/DC diode rectifier, which is controlled by an exciter voltage control. The exciter stator can be used to power a rotating exciter with overvoltage (OV) protection, which powers a field winding. The field winding is magnetically connected to a main machine stator of a second stationary part. An automatic voltage regulator (AVR) of the second stationary part sends current reference signals If* to the first stationary part for control of the brushless excitation system.

In an attempt to modernize and provide a fast response of the field winding, an excitation system based on thyristors has been proposed. The main advantages of such a solution, illustrated in Fig. 2, are cost savings in the power components of the AVR, that becomes only a measuring unit. At the same time, this solution provides a fast control of the field winding, as the field current reference If* is sent via radio link and transients of the exciter machine can be avoided. The current reference can thereafter be elaborated in a controller, which controller outputs a thyristor firing angle $\alpha$ to a thyristor control. The thyristor firing angle is then used to generate suitable gate pulses for six thyristors of a three-phase system.

Besides the benefits that it provides, thyristors are robust components that have been used for rotating power electronics application successfully in recent times.

A major drawback with a thyristor based current source converter (CSC) is however the fact that control of the thyristors is only possible by changing the firing angle $\alpha$, meaning that the power factor (PF) of the CSC is bound together with the rectified voltage $V_L$ (which relates to the active power at steady state conditions), as it can be easily observed by the expressions below, where the effect of the line inductance is excluded for simplicity:

$$V_{DC} = \frac{3\sqrt{2}}{\pi} V_L \cos \alpha$$

$$PF = \frac{3}{\pi} \cos \alpha$$

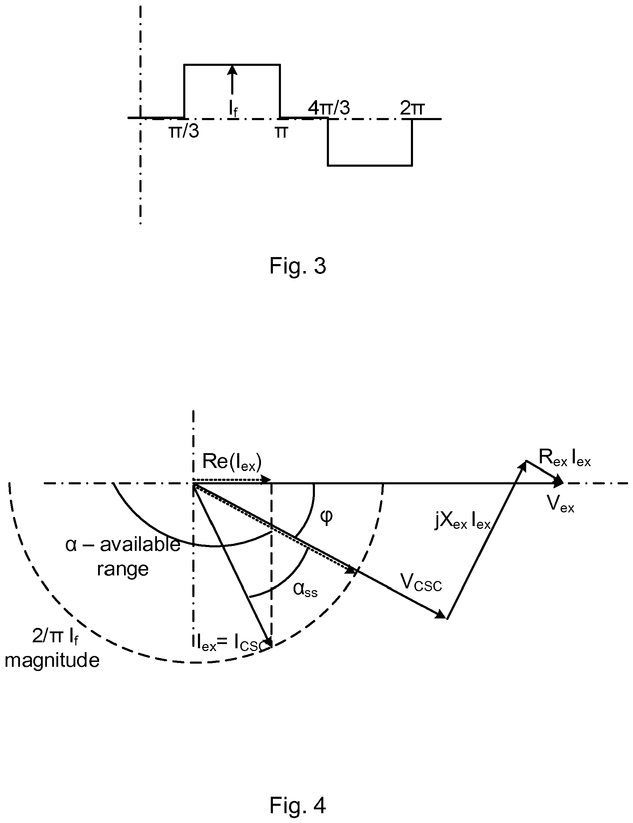

Furthermore, the operation of a thyristor rectifier implies that no zero vector is possible, meaning that the current $I_f$ flowing in the field winding is always flowing in two of the three phases of a three-phase system, with a square wave fashion, whose fundamental is $2/\pi$ $I_f$. This is illustrated in Fig. 3

The lack of power factor control stands out when considering that the full power for which the converter is rated is only needed during transient operations of energization/de-energization of the field winding, while during steady state, only a small active power flow is needed to compensate the system losses.

As an example, a field winding with inductance 125 mH, resistance 0.62 $\Omega$ and nominal current 250 A, needs about 38 kW in steady state condition. An exciter machine has in this example a line-to-line voltage of 430 V. The apparent power that is flowing during steady state conditions is then around 200 kVA. Fig. 4 shows the vector diagram where fundamental components only are taken into account.

From this discussion, it should appear clear that the control of the power factor allows for a better power optimization of the system, which in its turn can result in lower amount of copper used in the exciter machine as well as a reduction in overall volume.

## SUMMARY

One objective of the present invention is to enable the use of power factor control of a current source converter for a multiphase brushless excitation system.

According to a first aspect there is presented a current source converter (CSC) for a multiphase brushless excitation system. The CSC comprises a thyristor block and a commutation block. The thyristor block comprises a pair of thyristors per phase of the multiphase brushless excitation system configured in a full-wave bridge. The commutation block comprises a half-bridge current source converter with two commutation switches configured for two quadrant operation of the multiphase brushless excitation system. Each midpoint of the pair of thyristors is configured to be connected to an excitation phase of the multiphase brushless excitation system and DC terminals of each pair of thyristors are connected to DC terminals of the commutation block.

The commutation switches may be selected from one of the group of: integrated gate-commutated thyristor, IGCT, insulated-gate bipolar transistor IGBT, and metal oxide semiconductor field effect transistor, MOSFET, with diode.

The two commutation switches may be configured to be driven with opposite gate signals.

One of the two commutation switches may be arranged in parallel with a field winding resistance and a field winding inductance. The other one of the two commutation switches may be arranged in series with the field winding resistance and the field winding inductance.

Each thyristor may be arranged in series with an inductor. An RC snubber circuit may be arranged in parallel with each thyristor and inductor.

The full-wave bridge may be a Graetz bridge.

According to a second aspect there is presented a method for controlling a CSC for a multiphase brushless excitation system. The CSC comprises a thyristor block and a commutation block. The method is performed in a CSC controller and comprises receiving a current reference signal from an automatic voltage regulator, AVR, measuring a power factor of the multiphase brushless excitation system, determining an angle difference between the received current reference signal and the measured power factor, and outputting a modulation reference to the CSC, the modulation reference being dependent on the determined angle difference.

The method may further comprise adding a zero vector to the modulation reference, allowing turn off time for thyristors of the thyristor block during commutation.

According to a third aspect there is presented a CSC controller for a multiphase excitation system. The CSC controller comprises a processing circuitry and a computer program product storing instructions that, when executed by the processing circuitry, causes the CSC controller to receive a current reference signal from an AVR, measure a power factor of the multiphase brushless excitation system, determine an angle difference between the received current reference signal and the measured power factor, and to output a modulation reference to a CSC, the modulation reference being dependent on the determined angle difference.

By the presented aspects of a CSC topology, ratings of an excitation system can be reduced several times for driving the same synchronous machine, with savings in copper and volume. Moreover, efficiency can be increased as a consequence of a reduced reactive current during steady state operation.

The presented aspects further enable a way to safely ensure that thyristors are blocked during commutation and do not misfire. One commutation block with a limitation to two commutation switches is also usable for any number of thyristor pairs.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

Aspects and embodiments are now described, by way of example, with reference to the accompanying drawings, in which:

Fig. 1 is a diagram schematically illustrating a conventional brushless excitation system and control thereof;

Fig. 2 is a diagram schematically illustrating a conventional thyristor-based excitation system;

Fig. 3 is a diagram schematically illustrating an AC current in windings of an exciter machine as illustrated in Fig. 2;

Fig. 4 is a diagram schematically illustrating a vector diagram of a thyristor CSC;

Fig. 5 is a diagram schematically illustrating a CSC according to one embodiment of the invention;

Figs. 6A-B are diagrams schematically illustrating conduction state and commutation state for the topology illustrated in Fig. 5;

Fig. 7 is a diagram schematically illustrating a control overview for the topology illustrated in Fig. 5;

Fig. 8 is a diagram schematically illustrating a modified space vector modulation;

Fig. 9 is a flow chart schematically illustrating an embodiment of a control method; and

Fig. 10 is a diagram schematically illustrating a CSC controller according to one embodiment of the invention.

## DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

One way of solving power factor problems in connection with a current source converter (CSC) could be based on integrated gate-commutated thyristor (IGCT) with reverse blocking capability instead of use of thyristors. In an example, three thyristor pairs (or more, in case of additional phases) are substituted by IGCTs, which are able to interrupt the current. IGCTs are however generally more expensive and less mature in rotating applications compared to thyristors.

A topology is thus presented with a limited number of IGCTs, merging the need of controlling the reactive power flowing in an excitation system while reducing the number of switches (IGCT) that are more expensive than traditional thyristor.

The presented circuit configuration uses two kinds of power switches: thyristor and symmetric IGCT (or equivalently, insulated-gate bipolar transistor IGBT/ metal oxide semiconductor field effect transistor MOSFET with diode in series). The commutation process of the CSC is forced by the IGCT, and compared to a thyristor rectifier, it has full active and reactive power control. The presented topology reduces the number of costly components, especially as the number of phases increases.

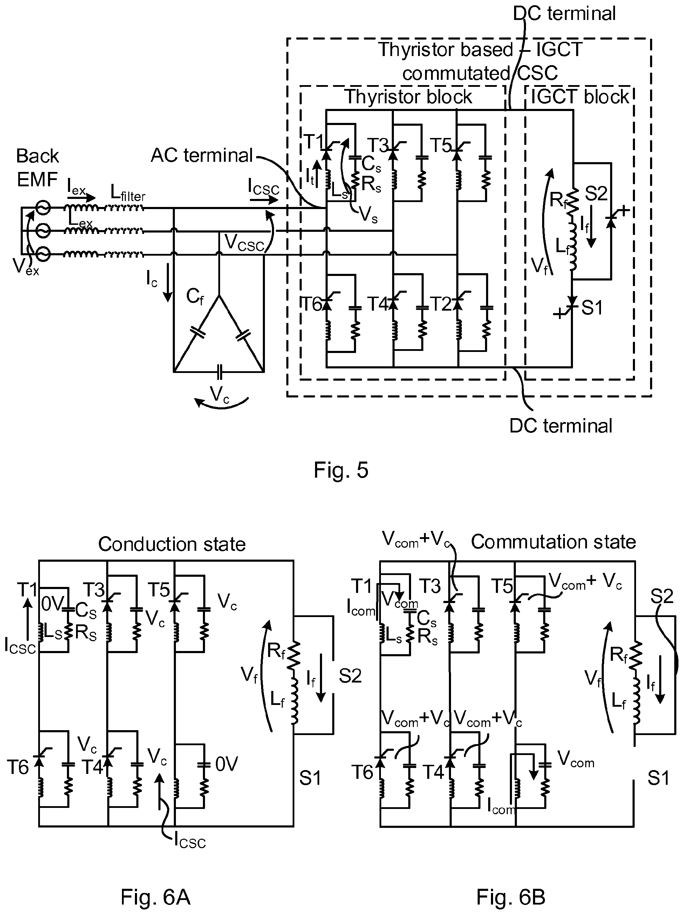

According to an aspect, an embodiment of a CSC for a multiphase brushless excitation system is presented with reference to Fig. 5. The CSC comprises a thyristor block and a commutation block. The thyristor block comprises a pair of thyristors T1-T6 per phase of the multiphase brushless excitation system configured in a full-wave bridge. The commutation block comprises a half-bridge current source converter with two commutation switches S1 and S2 configured for two quadrant operation of the multiphase brushless excitation system. Each midpoint, at the AC terminal, of the pair of thyristors is configured to be connected to an excitation phase of the multiphase brushless excitation system and DC terminals of each pair of thyristors are connected to DC terminals of the commutation block.

The commutation switches may be selected from one of the group of: integrated gate-commutated thyristor, IGCT, insulated-gate bipolar transistor IGBT, and MOSFET with diode.

The two commutation switches S1 and S2 may be configured to be driven with opposite gate signals.

Details of the aspect will be presented with reference to Figs. 5-9.

Fig. 5 shows a schematic overview of the presented topology. The CSC comprises a thyristor block made up of six (or more, for additional phases) traditional thyristors T1-T6 in a full-wave (Graetz) bridge current source converter, and a half-bridge current source converter commutation block (IGCT block) formed of two switches S1-S2, providing two quadrant operation (forward current, positive and negative voltage). A full-wave bridge current source converter provides the same polarity of output for either polarity of input. A half-bridge current source converter output either the positive or negative half of the input, while the other half is blocked.

In series with each thyristor, a small inductor is arranged, inductor $L_s$ for thyristor T1. This may be a stray inductance of the connection or, if needed, a di/dt limiter reactor. In parallel to the thyristor T1 and the inductor $L_s$, an RC snubber circuit with resistor $R_s$ and capacitor $C_s$ is arranged to assist the thyristor commutation. Again, the capacitance value $C_s$ is only dimensioned to take the energy of the stray inductance $L_s$ in order to apply a negative voltage across the thyristor to support the commutation. The resistor $R_s$ may be dimensioned to provide a damped circuit between $R_s$, $L_s$ and $C_s$.

The switches S1-S2 are illustrated as IGCT switches arranged in series in opposite directions. Resistor $R_f$ and inductor $L_f$ are the field winding resistance and inductance, respectively, which are arranged in parallel with switch S2.

As for an IGCT based CSC, some capacitors $C_f$ are used to provide a path to the excitation current $I_{ex}$ flowing in an excitation inductance $L_{ex}$ of the excitation system (Back EMF of exciter machine). The capacitors $C_f$ only have to compensate for the voltage drop $V_{ex}$ across the exciter inductance $L_{ex}$. A filtering inductor $L_{filter}$ can then be avoided as the excitation windings $L_s$ can be used for the purpose.

The thyristor block is configured to rectify each of the AC magnitudes $V_{ex}$ in the phases, while the commutation (IGCT) block is configured to interrupt the current $I_{ex}$. To enable this configuration, switches S1 and S2 are driven with opposite gate signals. Whenever S1 is conducting, the thyristor block is also conducting. The thyristors always see a forward voltage $V_s$ when switch S1 is switched on, as the snubber capacitor $C_s$ gets charged, and the thyristors can therefore conduct. When switch S1 is turned off and switch S2 is turned on, the field current $I_f$ closes through switch S2, effectively providing a zero vector. This feature guarantees a decoupling between the control of the voltage $V_f$ applied to the field winding, achieved by varying the modulation index governed by switches S1 and S2, and the reactive power related to the angle $\alpha$ with which the thyristors are fired. The angle $\alpha$ is a control variable which may be minimized to reduce the reactive power component. The firing of the thyristors is based on the status of S1/S2, i.e. they are fired whenever S1 is turned on. The pair of thyristors to be fired is determined by the control (i.e. the space vector).

In case the field winding of a machine rotor, wherein the commutation block is arranged in, has a split rotor configuration, the CSC may be configured with a separate commutation block for each field winding wherein each separate commutation block is arranged in parallel.

Fig. 6 illustrates an example of commutation for the presented CSC. In a conduction state, illustrated in Fig. 6A, any pair of thyristors T1-T6 can be configured to conduct the current I$_{CSC}$, here T1 and T2; S1 is conducting while S2 is open. During commutation, illustrated in Fig. 6B, S2 is closed first and S1 is opened directly thereafter, so that the field current I$_f$ freely can circulate through S2. As a result, the current I$_{com}$ on the rectified side of the thyristor converter becomes zero. The snubber capacitor C$_s$ provides a path for the current I$_{com}$ stored in the inductance Ls and the capacitor C$_s$ is charged as a consequence. This polarizes the thyristor that is then securely turned off.

After commutation a new pair of thyristors can be chosen for conduction state, no matter what the phase voltage is, as when S1 is put in conduction and S2 is open, the capacitors C$_s$ get discharged and a forward voltage V$_C$ appears across the thyristors. In this way can any current vector be generated. On the AC terminals of the CSC, current pulses will appear in the same fashion as a traditional IGCT based CSC.

A three-phase example has been presented, but the same principle is applicable to more phases. The number of thyristor would increase accordingly, two per phase, while the number of IGCT (or IGBT/MOSFET + diode) would remain the same.

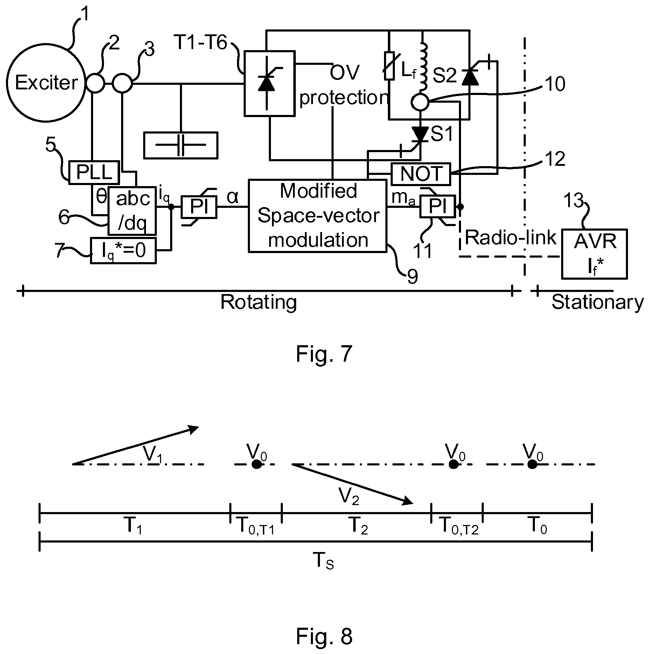

An overview of a control scheme is illustrated in Fig. 7. The AVR 13 sends a current reference I$_{f*}$ via radio link to a CSC controller 9 based inside the machine rotor, exactly as it happens for a thyristor-based CSC without a commutation block. At this point, a power factor angle θ can be passed through a controller 6, which will output a reactive power current i$_q$ of the lagging angle α of the CSC current. On the other hand, the field current is checked against the AVR reference, and this will output the modulation reference for the control scheme. The modulation scheme can be of any sort (i.e. space vector), but slightly modified to include the time needed for the thyristors to commutate and turn off. The exciter 1 of the excitation system produces a current I$_{ex}$ that is measured at point 2 by a phased locked loop, PLL, 5 to provide the power factor angle θ, and at point 3 by abc/dq 6 to provide the reactive power current i$_q$ via Park transformation. The reactive power current i$_q$ is adjusted with a reference current i$_q$* being zero, and proportional and integrating, PI, regulated to provide the lagging angle α of the CSC current. By setting the reference current i$_q$* to zero, the reactive current can be brought to zero. The received current reference I$_f$*, together with the current If measured at point 10, provides modulation index m$_a$ via PI regulator 11. The CSC controller 9 uses the m$_a$ and lagging angle α to drive switches S1 and S2 with opposite gate currents via NOT-gate 12, and thyristors Ti-T6 based on a modified space-vector modulation. The PI regulator 11 uses the current reference I$_f$*, set by the AVR, and the measured current I$_f$ to provide the modulation index m$_a$. If the difference between I$_{f*}$ and I$_f$ is zero, then m$_a$ stays the same over time. If there is a difference therebetween m$_a$ is changed to track the measured current I$_f$ to the current reference I$_f$*.

With respect to a conventional space vector modulation, a zero vector is here included after the dwelling time T1 and T2, as illustrated in Fig. 8. A zero vector is generated by simply switching on S2 and switching off S1.

In a traditional space vector (two level) modulation, three switch positions (corresponding to three space vectors) are typically used at any control time interval. These are illustrated with V1, V2, and V0 in Fig. 8. In particular, T1 and T2 are two non-null vectors, and V0 is a zero vector. Each vector is typically applied, within the control time interval (which is defined by the target frequency) for a time T1, T2, T0, respectively. In the presented version, two zero vectors, T0, T1 and T0, T2 are applied after the two space vectors V1 and V2, respectively, to allow the presented commutation process to take place.

Due to the two degrees of freedom offered by the lagging angle α and the modulation index m$_a$, a condition can be reached where only a minimal amount of reactive power is drawn from the exciter machine. The current vector I$_{CSC}$ has a small reactive component that compensates for the current provided by the filter capacitors, and an active component that is effectively used to supply the field power. These two components can be generated by any choice of m$_a$ and α. In particular, the variable m$_a$ drives the amount of power going to the field winding, while α is adjusted so that the reactive component of the current I$_{CSC}$ matches the reactive (negative) current flowing through the capacitors. This result in the exciter current I$_{ex}$ having a minimal reactive component. Due to the ability of creating a zero vector, the presented CSC can have a lower modulation index m$_a$, which is advantageous in steady state condition, while, at the same time, it is able to create a lagging factor α to compensate the leading power factor of the capacitors, resulting in a purely active exciter current I$_{ex}$.

A simulation has been performed for the topology illustrated in Fig. 5. The simulation showed that the response time for the presented CSC is the same as for any thyristor/IGCT based CSC topology.

From the control perspective, both power factor and field current can in the presented topology be treated in the same fashion as for a CSC with turn off devices (i.e. IGCTs). Reactive power is controlled by controlling the lagging angle α, and active power is controlled by varying the modulation index m$_a$.

When S1 is turned on (and S2 is turned off), a desired pair of thyristors, e.g. T1 and T6, receives a short signal to turn on at the same time. T1 and T6 will continue to conduct until the gate signal to S1 is set to zero, which interrupts the current flowing on the rectified side of the thyristor block. At this point, T1 and T6 see a negative voltage being applied, which is the effect of the charging of Cs, due to the stray inductance Ls. T1 and T6 are therefore turned off by the commutation. When S1 is off, the CSC is effective providing a zero vector at the AC terminal. Eventually, S1 is turned on again and a new pair of thyristors can be controlled to conduct. The thyristor gate signal is short, i.e. not kept during the whole conduction state. The thyristor stays in conduction until the current flowing through the thyristor is trying to reverse, i.e. until S1 is turned off.

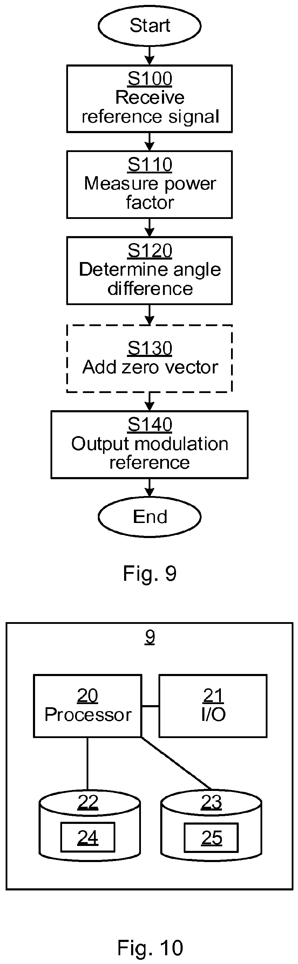

According to an aspect, an embodiment of a method for controlling a CSC for a multiphase brushless excitation system is presented with reference to Figs. 7 and 9. The CSC comprises a thyristor block and a commutation block. The method is performed in a CSC controller 9. In processing block S100 a current reference signal $I_{f*}$ is received from an AVR 13. In processing block S110 a power factor $i_q$ of the multiphase brushless excitation system is measured. In processing block S120 an angle difference $\alpha$ is determined between the received current reference signal If* and the measured power factor $i_q$. In optional processing block S130 a zero vector is added to the modulation reference, allowing turn off time for thyristors of the thyristor block during commutation. In processing block S140 a modulation reference is output to the CSC. The modulation reference is dependent on the determined angle difference.

According to an aspect, an embodiment of a CSC controller 9 for a multiphase excitation system is presented with reference to Fig. 10. The CSC controller 9 comprises a processing circuitry 20 and a computer program product 22, 23 storing instructions 24, 25, that, when executed by the processing circuitry, causes the CSC controller 9 to receive a current reference signal from an AVR, measure a power factor of the multiphase brushless excitation system, determine an angle difference between the received current reference signal and the measured power factor, and to output a modulation reference to the CSC, the modulation reference being dependent on the determined angle difference.

Fig. 10 is a schematic diagram showing some components of the CSC controller 9. The processing circuitry 20 may be provided using any combination of one or more of a suitable central processing unit, CPU, multiprocessing circuitry, microcontroller, digital signal processing circuitry, DSP, application specific integrated circuit etc., capable of executing software instructions of a computer program 24 stored in a memory 22. The memory can thus be considered to be or form part of the computer program product 22. The processing circuitry 20 may be configured to execute methods described herein with reference to Fig. 10.

The memory may be any combination of read and write memory, RAM, and read only memory, ROM. The memory may also comprise persistent storage, which, for example, can be any single one or combination of magnetic memory, optical memory, solid state memory or even remotely mounted memory.

A second computer program product 23 in the form of a data memory may also be provided, e.g. for reading and/or storing data during execution of software instructions in the processing circuitry 20. The data memory can be any combination of read and write memory, RAM, and read only memory, ROM, and may also comprise persistent storage, which, for example, can be any single one or combination of magnetic memory, optical memory, solid state memory or even remotely mounted memory. The data memory may e.g. hold other software instructions 25, to improve functionality for the CSC controller 9.

The CSC controller 9 may further comprise an input/output (I/O) interface 21 including e.g. a user interface. The CSC controller 9 may further comprise a receiver configured to receive signalling from other nodes, and a transmitter configured to transmit signalling to other nodes. Other components of the CSC controller 9 are omitted in order not to obscure the concepts presented herein.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

## Claims

1. A current source converter, CSC, for a multiphase brushless excitation system, the CSC comprising a thyristor block and a commutation block, the thyristor block comprising a pair of thyristors (T1-T6) per phase of the multiphase brushless excitation system configured in a full-wave bridge, and the commutation block comprising a half-bridge current source converter with two commutation switches (S1, S2) configured for two quadrant operation of the multiphase brushless excitation system, wherein each midpoint of the pair of thyristors is configured to be connected to an excitation phase of the multiphase brushless excitation system and DC terminals of each pair of thyristors are connected to DC terminals of the commutation block.

2. The CSC as claimed in claim 1, wherein the commutation switches are selected from one of the group of: integrated gate-commutated thyristor, IGCT, insulated-gate bipolar transistor IGBT, and metal oxide semiconductor field effect transistor, MOSFET, with diode.

3. The CSC as claimed in claim 1 or 2, wherein the two commutation switches are configured to be driven with opposite gate signals.

4. The CSC as claimed in any of claims 1 to 3, wherein one of the two commutation switches (S2) is arranged in parallel with a field winding resistance ($R_f$) and a field winding inductance ($L_f$), and the other one of the two commutation switches (S1) is arranged in series with the field winding resistance ($R_f$) and the field winding inductance ($L_f$).

5. The CSC as claimed in any of claims 1 to 4, wherein each thyristor (T1-T6) is arranged in series with an inductor ($L_s$), and an RC snubber circuit ($R_s$, $C_s$) is arranged in parallel with each thyristor and inductor.

6. The CSC as claimed in any of claims 1 to 5, wherein the full-wave bridge is a Graetz bridge.

7. A method for controlling a current source converter, CSC, for a multiphase brushless excitation system, the CSC comprising a thyristor block and a commutation block, the method being performed in a CSC controller (9) and comprises:

  - receiving (S100) a current reference signal from an automatic voltage regulator, AVR;
  - measuring (S110) a power factor of the multiphase brushless excitation system;
  - determining (S120) an angle difference between the received current reference signal and the measured power factor; and
  - outputting (S140) a modulation reference to the CSC, the modulation reference being dependent on the determined angle difference.

8. The method as claimed in claim 7, further comprising:

  - adding (S130) a zero vector to the modulation reference, allowing turn off time for thyristors of the thyristor block during commutation.

9. A current source converter, CSC, controller for a multiphase excitation system, the CSC controller comprising a processing circuitry (20) and a computer program product (22, 23) storing instructions (24, 25) that, when executed by the processing circuitry, causes the CSC controller (9) to execute the method according to any of claims 7 to 8.

Fig. 1

Fig. 2

Fig. 3

Fig. 4

Fig. 5

Fig. 6A

Fig. 6B

Fig. 7

Fig. 8

Start

**S100**
Receive
reference signal

**S110**
Measure power
factor

**S120**
Determine angle
difference

**S130**
Add zero vector

**S140**
Output modulation
reference

End

Fig. 9

**9**

**20**
Processor

**21**
I/O

**22**

**24**

**23**

**25**

Fig. 10

Europäisches Patentamt

European Patent Office

Office européen des brevets

**EUROPEAN SEARCH REPORT**

Application Number

EP 19 21 2152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GB 1 595 650 A (ENGLISH ELECTRIC CO LTD) 12 August 1981 (1981-08-12) * abstract * * page 1 - page 3 * * figures 1-6 * ----- | 1-9 | INV. H02P6/32 H02P9/30 |
| Y | US 6 420 842 B1 (AMERICAN SUPERCONDUCTOR CORP [US]) 16 July 2002 (2002-07-16) * abstract * * figure 1 * * column 2 * ----- | 1-9 | |

TECHNICAL FIELDS SEARCHED (IPC)

H02P

The present search report has been drawn up for all claims

| Place of search | Date of completion of the search | Examiner |
|---|---|---|
| Munich | 30 April 2020 | Vanata, Daniela |

EPO FORM 1503 03.82 (P04C01)

## ANNEX TO THE EUROPEAN SEARCH REPORT
## ON EUROPEAN PATENT APPLICATION NO.

EP 19 21 2152

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2020

| Patent document cited in search report | | Publication date | Patent family member(s) | | Publication date |
|---|---|---|---|---|---|
| GB 1595650 | A | 12-08-1981 | NONE | | |
| US 6420842 | B1 | 16-07-2002 | AT | 262747 T | 15-04-2004 |
| | | | AU | 2424601 A | 24-07-2001 |
| | | | DE | 60009349 T2 | 10-02-2005 |
| | | | EP | 1247324 A1 | 09-10-2002 |
| | | | JP | 3836370 B2 | 25-10-2006 |
| | | | JP | 2003521206 A | 08-07-2003 |
| | | | US | 6828919 B1 | 07-12-2004 |
| | | | US | 2002053889 A1 | 09-05-2002 |
| | | | WO | 0152391 A1 | 19-07-2001 |

EPO FORM P0459

For more details about this annex : see Official Journal of the European Patent Office, No. 12/82